(19) Europäisches Patentamt / European Patent Office / Office européen des brevets

(11) **EP 2 216 972 B1**

(12) **EUROPEAN PATENT SPECIFICATION**

(45) Date of publication and mention of the grant of the patent:
**18.02.2015 Bulletin 2015/08**

(21) Application number: **08863310.2**

(22) Date of filing: **09.12.2008**

(51) Int Cl.:
*H04M 3/22* *(2006.01)*　　*H04M 11/06* *(2006.01)*
*H04M 3/30* *(2006.01)*

(86) International application number:
**PCT/CN2008/073393**

(87) International publication number:
**WO 2009/076882 (25.06.2009 Gazette 2009/26)**

(54) **A SPLITTER-DETECTING METHOD, DEVICE AND SYSTEM**

VERFAHREN, GERÄT UND SYSTEM ZUR SPLITTERDETEKTION

PROCÉDÉ, DISPOSITIF ET SYSTÈME DE DÉTECTION DE SÉPARATEUR

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.12.2007　CN 200710198452**

(43) Date of publication of application:
**11.08.2010　Bulletin 2010/32**

(73) Proprietor: **Huawei Technologies Co., Ltd.**
**Longgang District, Shenzhen**
**Guangdong 518129 (CN)**

(72) Inventor: **LV, Jie**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(56) References cited:
EP-A1- 1 761 012　　WO-A1-03/088608
WO-A2-2007/008835　CN-A- 1 960 402
US-A1- 2002 196 908

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE TECHNOLOGY**

The present invention relates to the filed of network communication technology, and more particularly to a splitter-detecting method, device and system.

**BACKGROUND OF THE INVENTION**

Digital Subscriber Line (DSL) technology is a high speed transmission technology conducting data transmission through telephone twist pair, that is, Unshielded Twist Pair (UTP), including Asymmetrical Digital Subscriber Line (ADSL), Very-high-bit-rate Digital Subscriber Line (VDSL), Single-pair High-bit-rate Digital Subscriber Line (SHDSL), Asymmetrical Digital Subscriber Line 2 (ADSL2), Asymmetrical Digital Subscriber Line 2plus (ADSL2plus), Very-high-bit-rate Digital Subscriber Line 2 (VDSL2), and the like. xDSL is a general designation for the above subscriber lines.

By using baseband modulation method, Integrated Services Digital Network (ISDN) can provide users with a bandwidth of 144kbps using two B channels and one D channel, and ISDN transmits signals using frequencies between 80kHz to 120kHz.

ADSL, ADSL2, ADSL2+ and VDSL2 and other DSL standards use Discrete Multitone (DMT) technologies, these technologies significantly improve Internet access bandwidth, in which the ADSL technology can achieve at most a bandwidth of approximately 8M, and VDSL2 can achieve a bandwidth of more than 50M.

With the rapid development of the Internet, the bandwidth of the ISDN is not able to meet the need of Internet accessing any more. Therefore, the Internet access modes for digital subscriber lines have updated from ISDN to xDSL. However, the existing ISDN telephone and other services can not be discarded, and therefore, it is required to implement ISDN services and xDSL services in a pair of subscriber lines at the same time.

ADSL, ADSL2, ADSL2+, VDSL2 and other xDSL technologies all define in standards a mode of common transmission with ISDN services (Over ISDN). With Over ISDN mode, all of the xDSL standards transmit signals only using frequencies of more than 120kHz, ISDN services transmit signals using frequencies below 120kHz. ISDN signals and xDSL signals are split or mixed through an xDSL/ISDN splitter. The xDSL/ISDN splitter mainly functions to split the ISDN signals with the xDSL frequency band signals, thus enabling the ISDN services and the xDSL services to be carried on normally in the same twisted pair at the same time without interruption and ensuring that the xDSL services and the ISDN services do not interfere with each other.

A system providing multiple xDSL accesses is referred to as a DSL access multiplexer (DSLAM). Both a central office end and a client need a splitter/integrator to split and integrate ISDN signals with xDSL signals, the xDSL/ISDN splitter of the central office end tends to be built in the DSLAM or pre-installed, and will not be missing generally. The xDSL/ISDN splitter of the client is installed in the user's home, which may not be connected due to lack of expertise or carelessness of the user. If the xDSL/ISDN splitter is not connected, attenuation will arise to the xDSL signals, thus greatly reducing the signal to noise ratio of the xDSL signals, and reducing the rate of the xDSL. In addition, because the high-frequency harmonics of ISDN signals will all be coupled to the xDSL line in the absence of the xDSL/ISDN splitter, the harmonics directly coupling to the lines is usually higher in energy by more than 40dB than the ISDN crosstalk, so strong xDSL interference will seriously affect the xDSL services, bring about a certain reduction of the rate of the xDSL services, and cause the xDSL services to generate errors, thus affecting the quality of services.

The prior art has at least the following problems: No method for automatically detecting whether a user side installs an xDSL/ISDN splitter is provided in the prior art, and a fault cannot be found and removed in time, thus affecting the quality of xDSL services.

EP 1 761 012 A1 describes a method to detect a defective or missing filter. "The test software analyzes these measurements, correlates the timing info with the timing of the generation of the disturbing narrowband signal, and will conclude that the central splitter 3 or an inline filter is missing when a clear correlation can be found between the narrowband disturbing signal and the consequences on the broadband signals, such as errors, changed bit-loading, or temporarily energy increase in case of a non-active broadband connection". (See D1, paragraph [0020]).

WO 2007/008835 A2 describes a estimates of a communication system configuration, such as a DSL system, are based on operational data collected from a network element management system, protocol, users and/or the like. The operational data collected from the system can include performance-charactering operational data that typically is available in a DSL system via element-management-system protocols. (See abstract of D2).

**SUMMARY OF THE INVENTION**

The present invention is directed to a splitter-detecting method, device and system, so as to realize the automatic detection of whether an xDSL/ISDN splitter is absent, thereby reducing the cost of maintenance.

Accordingly, in one aspect, the present invention provides a splitter-detecting method according to any one of claims 1-5.

In another aspect, the present invention provides a splitter-detecting device according to any one of claim 6.

In still another aspect, the present invention provides a splitter-detecting system according to any one of claim 7.

Compared with the prior art, the present invention has the following advantages. With the embodiments of the present invention, whether an xDSL/ISDN splitter is absent is detected according to the correlation between the ISDN disturber PSD model and the bit distributing parameters of the xDSL sub-carriers or the similarity between the ISDN disturber PSD model and the QLN of the xDSL line, so the automatic detection of whether the xDSL/ISDN splitter being present is realized, thus reducing the positioning cost of the fault caused by the absence of the xDSLISDN splitter.

## BRIEF DESCRIPTION OF THE DRAWINGS

FIG. 1 is a flow chart of a first embodiment of a splitter-detecting method according to the present invention;

FIG. 2 is a waveform diagram of logarithmic values of a PSD model according to an embodiment of the present invention;

FIG. 3 is a flow chart of a second embodiment of a splitter-detecting method according to the present invention; and

FIG. 4 is a structural view of a splitter-detecting system according to an embodiment of the present invention.

## DETAILED DESCRIPTION OF THE EMBODIMENTS

The present invention provides a splitter-detecting method, in which whether an xDSL/ISDN splitter is absent is detected according to the correlation between the ISDN disturber PSD model and the bit distributing parameters of the xDSL sub-carriers or the similarity between the ISDN disturber PSD model and the QLN of the xDSL line, so the automatic detection of whether the xDSL/ISDN splitter being present is realized, thus reducing the positioning cost of such a fault.

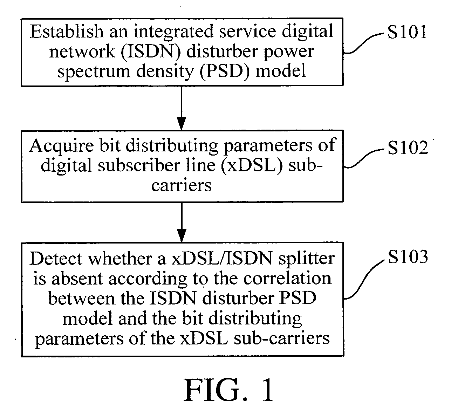

FIG. 1 is a flow chart of a first embodiment of a splitter-detecting method according to the present invention, which includes the following steps.

In Step S101, an ISDN disturber PSD model is established. The ISDN transmission PSD or fundamental waves of the ISDN transmission PSD are used as the ISDN disturber PSD model in the embodiment of the present invention. Linear values of the ISDN transmission PSD using an encoding scheme of 2B1Q may be approximated with the following formula:

$$PSD_{ISDN\text{-}Disturber}(f) = \frac{51.4}{f_0} \times \frac{\left[\sin\left(\dfrac{\pi f}{f_0}\right)\right]^2}{\left(\dfrac{\pi f}{f_0}\right)^2} \times \frac{1}{1 + \left(\dfrac{f}{f_0}\right)^4} \tag{1}$$

In which, $f$ is the frequency of disturber, $f_0$ is 80000Hz, the unit of PSD is mw/Hz (milliwatt/Hz). The logarithmic values of the PSD model may be obtained through conversion:

$$PSD_{ISDN\text{-}log}(f) = 10\log_{10}PSD_{ISDN\text{-}Disturber}(f) \tag{2}$$

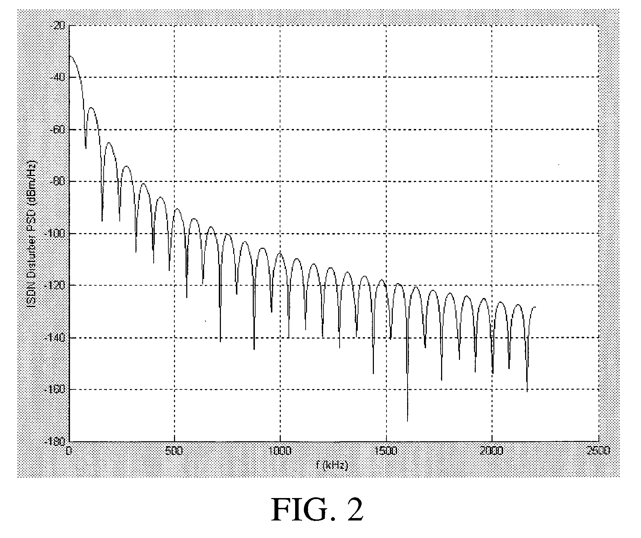

The waveform of the logarithmic values of the PSD model after conversion is as shown in FIG. 2.

In order to match the bit distributing parameters Bi of the xDSL sub-carriers, it is desired to discretize the PSD of ISDN to a sequence with a length equal to the number of the xDSL sub-carriers, thus taking $PSD_{ISDN}(i) = PSD_{ISDN\text{-}log}(4312.5 \times i)$. As such, the ISDN disturber PSD model is obtained. The ISDN disturber PSD models for other encoding types may also be obtained with similar method.

In practical application, what affects the Bi distribution is mainly the fundamental wave of the ISDN transmission PSD. It can be seen from the ISDN disturber PSD model of formula (1), the ISDN disturber has the local maximum when

$$f = (n + \frac{1}{2})f_0$$,

and has the local minimum when $f=n \cdot f_0$, so the fundamental wave of the ISDN transmission PSD is a sine wave or a cosine wave with a periodical frequency of $f_0$. By utilizing such a characteristic, the following cosine function may also be used as the ISDN disturber PSD model:

$$PSD_{ISDN-\log}(f) \cong \cos(2\pi * f / f_0) \tag{3}$$

In Step S102, the bit distributing parameters of the xDSL sub-carriers are acquired. A transceiver unit of xDSL preserves the information about the bit distributing parameters Bi of xDSL sub-carriers, so the Bi may be acquired by a network management system from a DSLAM through an SNMP protocol.

In Step S103, whether an xDSL/ISDN splitter is absent is detected according to the correlation between the ISDN disturber PSD model and the bit distributing parameters of the xDSL sub-carriers.

The whole frequency band is divided into different sub-carriers to carry bit data according to a certain frequency interval (4.3125kHz) based on the xDSL of the DMT, each sub-carrier calculates the number of bits that can be carried according to the signal to noise ratio, with the bit distributing parameter Bi of the $i^{th}$ sub-carrier being calculated as follows.

$$\text{Since } SNR_i = S0 + 3 \times Bi + SNRM \tag{4}$$

S0 is a minus encoding gain of 9.8dB, representing the lowest signal to noise ratio needed to carry the bits; SNRM (Signal to Noise Ratio Margin) is a margin reserved for the signal to noise ratio in order to ensure that an error rate requirement can be achieved for a line even in a case of changing environmental noise; and $SNR_i$ is the logarithmic value of the signal to noise ratio of the $i^{th}$ sub-carrier, $SNR_i$ may also be represented with the following formula:

$$SNR_i = PSD_{signal-i} - PSD_{Noise-i} + Hlog_i \tag{5}$$

$PSD_{signal-I}$, $PSD_{Noise-I}$, $Hl_{ogi}$ are respectively the logarithmic value of the PSD sent by the $i^{th}$ sub-carrier signal, the logarithmic value of the PSD of noise, and the logarithmic value of the amplitude of a transfer function. It can be derived from formulas (4) and (5) that:

$$B_i = ((PSD_{signal-i} + Hlog_i - SNRM - S0) - PSD_{Noise-i})/3 \tag{6}$$

S0 and SNRM are unchanged, so Hlog is also basically unchanged for the same subscriber line, and the signal sending power also varies only within a certain range; however, the variation range for the PSD of noise may be very large. Therefore, Bi is strongly correlated with the PSD of noise.

If a line is not connected with an xDSL/ISDN splitter, the high-frequency harmonics of ISDN is coupled directly to the xDSL line, becomes noise and is received by an xDSL transceiver unit, thus affecting the bit distributing parameters Bi of the xDSL. Therefore, the sequence of Bi of the xDSL may be correlated with the ISDN disturber PSD model, if there is a high correlation between the two sequences, it indicates that noise from the ISDN PSD coupling exists, and it is determined that the xDSL/ISDN splitter is absent. On the contrary, if the correlation is low or does not exist, it is determined that such a fault does not exist.

Methods such as Pearson formula or calculating the cosine of included angle of vectors may be adopted to calculate the correlation coefficient between the ISDN disturber PSD model and the sequence of bit distributing parameters Bi of xDSL, but the embodiments of the present invention are illustrated by taking Pearson formula as an example.

$$R_{xy} = \frac{\sum (x_i - \bar{x})(y_i - \bar{y})}{(n-1)S_x S_y} \tag{7}$$

In this formula, $x_i$ represents the $i^{th}$ value in sequence x, $y_i$ represents the $i^{th}$ value in sequence y, $\bar{x}$ and $\bar{y}$ represent the average values of the sequence x and the sequence y respectively. $S_x$ and $S_y$ represent standard errors of the sequence x and the sequence y. In the embodiments of the present invention, the sequence x is a sequence of $PSD_{ISDN}$, and the sequence y is a sequence of Bi. The ISDN disturber PSD model is fixed, so the $S_x$ is a fixed value, and therefore, in the above formula, the $S_x$ in the denominator can also be removed. The correlation coefficient calculation formula used in practice may be simplified to the following formula:

$$R_{xy} = \frac{\sum (x_i - \bar{x})(y_i - \bar{y})}{(n-1)S_y} \tag{8}$$

When the formula (3) is adopted as the ISDN disturber PSD model, the formula (3) is substituted for the x in the formula (8), and simplification is done. The average value for cosine function within a number of periods is approximately zero, i.e., $\bar{x} \cong 0$, and thus the formula (8) may be simplified to:

$$R_{xy} = \frac{\sum x_i (y_i - \bar{y})}{(n-1)S_y} \tag{9}$$

Furthermore, since $\dfrac{\sum x_i \bar{y}}{(n-1)} = \bar{x} \cdot \bar{y} \cdot n / (n-1) \cong 0$ the formula (9) is further simplified to:

$$R_{xy} = \frac{\sum x_i y_i}{(n-1)S_y} = \frac{\sum B_i \cdot \cos[2\pi(4.3125 \times i)/f_0]}{n-1} \cdot \frac{1}{S_y} \tag{10}$$

Obviously, the calculation amount for the formula (10) is much simpler than that for the formula (8). If the standard error $S_y$ of Bi of the xDSL varies only a little, this term may be removed from the formula (10), thus further simplifying the calculation.

After the correlation coefficient $R_{xy}$ between the ISDN disturber PSD model and the bit distributing parameters of the xDSL sub-carriers is calculated, the absolute value of $R_{xy}$ is compared with a threshold value to determine whether the xDSL/ISDN splitter is absent.

It can be seen from the formula (6) that, the larger the PSD of the noise $PSD_{Noise}$, the smaller the Bi, so the Bi is negatively correlated with $PSD_{Noise}$. If the xDSL/ISDN splitter is absent, the PSD of ISDN that coupled to the line becomes the noise, and at this point, the Bi should be negatively correlated with the ISDN PSD. When the xDSL/ISDN splitter is present, the high-frequency harmonics of the ISDN is isolated by the xDSL/ISDN splitter and will not be coupled to the line, and at this point, the noise of the xDSL line is unrelated to the ISDN PSD, so the Bi should also have no correlation with the ISDN PSD.

Therefore, a threshold value T' may be set according to measured data, and T' is a negative number. When the negative correlation between the Bi and the ISDN model is large, that is, the correlation coefficient $R_{xy} < T'$, it may be determined that the xDSL/ISDN splitter is absent. When $R_{xy} > T'$, the determination on the absence of the xDSL/ISDN splitter is not made. It is also possible to compare the absolute value of $R_{xy}$ with a positive threshold value T, if the absolute value of $R_{xy}$ is larger than the threshold value, it is determined that the xDSL/ISDN splitter is absent; otherwise, the determination on the absence of the xDSL/ISDN splitter is not made.

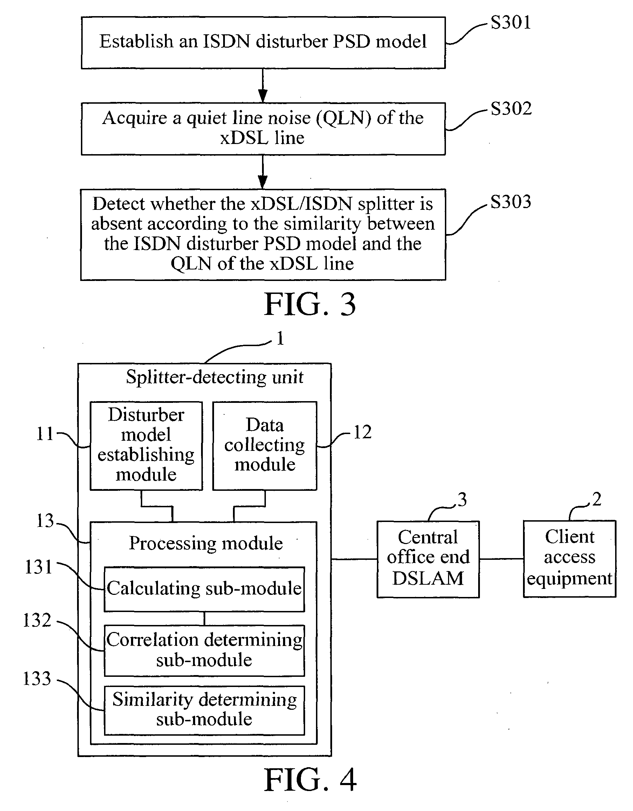

FIG. 3 is a flow chart of a second embodiment of a splitter-detecting method according to the present invention, which includes the following steps.

In Step S301, an ISDN disturber PSD model is established. The establishing method of the ISDN disturber PSD model is the same as that in the step S101, and is not described here any more.

In Step S302, a QLN of the xDSL line is acquired. QLN parameters may be acquired by a network management system from a DSLAM through an SNMP protocol.

In Step S303, whether an xDSL/ISDN splitter is absent is detected according to the similarity between the ISDN disturber PSD model and the QLN of the xDSL line.

Because all DMT-based xDSL transceivers support inquiring bit distributing parameter Bi, the method for detecting the ISDN with the Bi is relatively common. However, it can be seen from the formula (6), the Bi is correlated with the noise indirectly, if the noise of the xDSL line may be acquired, a higher detecting accuracy may be achieved. The QLN is the PSD of the noise received by a receiving end when there is no xDSL signals in the line. At present, many xDSL transceivers support inquiring QLN parameter directly, or testing this parameter through a Double Ended Loop Test (DELT). With this parameter, matching the QLN with the ISDN disturber PSD model may acquire a higher detecting accuracy.

The similarity between the QLN with the ISDN disturber PSD model is calculated with a method of linear regression in the embodiment of the present invention, and the calculation formula is as follows:

$$R_{xy} = \frac{\sum (x_i - y_i)^2}{\sqrt{\sum x_i^2 \cdot \sum y_i^2}} \qquad (11)$$

In the xDSL, because of the signal to noise ratio, the bit number carried by the lower sub-carrier and the higher sub-carrier is zero, and thus when performing matching, it is generally desired to filter the matched sub-carriers, remove the sub-carriers with the lowest and the highest frequencies, so as to reduce the error and acquire the higher accuracy. In addition, the Pearson formula provided in the step S103 in the first embodiment may also be adopted to calculate the similarity between the ISDN disturber PSD model and the QLN.

If the xDSL/ISDN splitter is absent, what the QLN parameter measures is basically the crosstalk of the ISDN, and the QLN should be positively correlated with the ISDN disturber PSD model. Therefore, a threshold value T1 may be set according to measured data, if the similarity is larger than T1, it is determined that the xDSL/ISDN splitter is absent; otherwise, the determination on the absence of the xDSL/ISDN splitter is not made.

The splitter-detecting method described above detects automatically the fault of the xDSL/ISDN splitter being absent through the parameter acquired by the network management system, without the need of appointing a professional maintainer to inquire or examine to users' home whether the xDSL/ISDN splitter is absent, thus reducing the cost of maintenance.

FIG. 4 is a structural view of a splitter-detecting system according to an embodiment of the present invention. The system includes a splitter-detecting unit 1, a client access equipment 2, and a central office end DSLAM 3.

The splitter-detecting unit 1 is adapted to establish an ISDN disturber PSD model, acquire bit distributing parameters of xDSL sub-carriers, and detect whether an xDSL/ISDN splitter is absent according to the correlation between the ISDN disturber PSD model and the bit distributing parameters of the xDSL sub-carriers; or acquire a QLN of the xDSL line, and detect whether the xDSL/ISDN splitter is absent according to the similarity between the ISDN disturber PSD model and the QLN of the xDSL line;

The client access equipment 2 is adapted to receive and transmit xDSL signals for modulation and demodulation.

The central office end DSLAM 3 is adapted to receive and split the signals sent by the client access equipment 2.

The splitter-detecting unit 1 includes a disturber model establishing module 11, a data colleting module 12, and a processing module 13. The disturber model establishing module 11 is adapted to establish an ISDN disturber PSD model.

The data collecting module 12 is adapted to acquire bit distributing parameters of xDSL sub-carriers or a QLN of the xDSL line.

The processing module 13 is connected with the disturber model establishing module 11 and the data collecting module12, and is adapted to calculate the correlation between the ISDN disturber PSD model and the bit distributing parameters of the xDSL sub-carriers or the similarity between the ISDN disturber PSD model and the QLN of the xDSL line, and detect whether an xDSL/ISDN splitter is absent according to the correlation or the similarity.

The processing module 13 includes a calculating sub-module 131, a correlation determining sub-module 132, and a similarity determining sub-module 133. The calculating sub-module 131 is adapted to calculate the correlation coefficient between the ISDN disturber PSD model and the bit distributing parameters of the xDSL sub-carriers or the similarity between the ISDN disturber PSD model and the QLN of the xDSL line.

The correlation determining sub-module 132 is connected with the calculating sub-module 131, and is adapted to determine whether the absolute value of the correlation coefficient calculated by the calculating sub-module 131 is larger than a first threshold value, and if so, determine that an xDSL/ISDN splitter is absent.

The similarity determining sub-module 133 is connected with the calculating sub-module 131, and is adapted to determine whether the similarity calculated by the calculating sub-module 131 is larger than a second threshold value, and if so, determine that the xDSL/ISDN splitter is absent.

In the splitter-detecting system described above, the splitter-detecting unit 1 may be a stand-alone device, and may be integrated into central office end access equipment, for example, the central office end DSLAM 3.

For the above splitter-detecting system, the splitter-detecting unit 1 detects whether the xDSL/ISDN splitter is present according to the correlation between the ISDN disturber PSD model and the bit distributing parameters of the xDSL sub-carrier or the similarity between the ISDN disturber PSD model and the QLN of the xDSL line, so automatic detection of whether the xDSL/ISDN splitter being absent is realized, thus reducing the positioning cost of such a fault.

Through the above detailed description of the embodiments, it is clear to persons skilled in the art that the present invention may be accomplished through hardware, or through software plus necessary universal hardware platform. Base on this, the technical solutions of the present invention may be embodied in the form of a software product. The software product may be stored in one or more nonvolatile storage media (for example, CD-ROM, USB flash drive, or removable hard disk) and contain several instructions adapted to instruct a computer equipment (for example, a personal computer, a server, or a network equipment) to perform the method according to the embodiments of the present invention.

In summary, the above descriptions are only preferred embodiments of the present invention, but not intended to limit the protection scope of the present invention. Any modification, equivalent replacement, and improvement made without departing from the principle of the present invention fall within the scope of the present invention.

**Claims**

1. A splitter-detecting method, comprising:

    establishing (S201, S401) an integrated service digital network, ISDN, disturber power spectrum density, PSD, model;
    acquiring (S202) bit distributing parameters of digital subscriber line, xDSL, sub-carriers, and detecting (S203) whether an xDSL/ISDN splitter is absent according to the relation between the ISDN disturber PSD model and the bit distributing parameters of the xDSL sub-carriers; or acquiring (S402) a quiet line noise, QLN, of the xDSL line, and detecting (S403) whether the xDSL/ISDN splitter is absent according to the similarity between the ISDN disturber PSD model and the QLN of the xDSL line;
    wherein, the detecting (S203) whether the xDSL/ISDN splitter is absent according to the correlation between the ISDN disturber PSD model and the bit distributing parameters of the xDSL sub-carriers comprises:

        calculating a correlation coefficient between the ISDN disturber PSD model and the bit distributing parameters of the xDSL sub-carriers;
        determining whether an absolute value of the correlation coefficient is larger than a preset threshold value; and
        if so, determining that the xDSL/ISDN splitter is absent;
        wherein, the detecting (S403) whether the xDSL/ISDN splitter is absent according to the similarity between the ISDN disturber PSD model and the QLN of the xDSL line comprises:

            calculating the similarity between the ISDN disturber PSD model and the QLN of the xDSL line;
            determining whether the similarity is larger than a preset threshold value; and
            if so, determining that the xDSL/ISDN splitter is absent.

2. The splitter-detecting method according to claim 1, wherein, the establishing the ISDN disturber PSD model comprises: using the ISDN transmission PSD or a fundamental wave of the ISDN transmission PSD as the ISDN disturber PSD model.

3. The splitter-detecting method according to claim 1, wherein, the acquiring the bit distributing parameters of the xDSL sub-carriers or the QLN of the xDSL line comprises: acquiring the bit distributing parameters of the xDSL sub-carriers or the QLN of the xDSL line from a digital subscriber line access multiplexer, DSLAM, through a simple network management protocol, SNMP.

4. The splitter-detecting method according to claim 1, wherein, the calculating the correlation between the ISDN disturber PSD model and the bit distributing parameters of the xDSL sub-carriers comprises: utilizing Pearson's correlation calculation formula to calculate the correlation.

5. The splitter-detecting method according to claim 1, wherein, the calculating the similarity between the ISDN disturber PSD model and the QLN of the xDSL line comprises: utilizing a method of linear regression to calculate the similarity.

6. A splitter-detecting device, comprising:

   a disturber model establishing module (11), adapted to establish an integrated service digital network, ISDN, disturber power spectrum density, PSD, model;
   a data collecting module (12), adapted to acquire bit distributing parameters of digital subscriber line, xDSL, sub-carriers or a quiet line noise, QLN, of the xDSL line; and
   a processing module (13), connected with the disturber model establishing module (11) and the data collecting module (12), and adapted to calculate the correlation between the ISDN disturber PSD model and the bit distributing parameters of the xDSL sub-carriers or the similarity between the ISDN disturber PSD model and the QLN of the xDSL line, and detect whether an xDSL/ISDN splitter is absent according to the correlation or the similarity;
   wherein, the processing module (13) comprises:

   a calculating sub-module (131), adapted to calculate a correlation coefficient between the ISDN disturber PSD model and the bit distributing parameters of the xDSL sub-carriers or the similarity between the ISDN disturber PSD model and the QLN of the xDSL line; a correlation determining sub-module (132), connected with the calculating sub-module, and adapted to determine whether an absolute value of the correlation coefficient calculated by the calculating sub-module is larger than a first threshold value, and if so, determine that an xDSL/ISDN splitter is absent; or
   a similarity determining sub-module (133), connected with the calculating sub-module, and adapted to determine whether the similarity calculated by the calculating sub-module is larger than a second threshold value, and if so, determine that the xDSL/ISDN splitter is absent.

7. A splitter-detecting system, comprising:

   a splitter-detecting unit (1), adapted to establish an integrated service digital network, ISDN, disturber power spectrum density, PSD, model, acquire bit distributing parameters of digital subscriber line, xDSL, sub-carriers, and detect whether an xDSL/ISDN splitter is absent according to the correlation between the ISDN disturber PSD model and the bit distributing parameters of the xDSL sub-carriers; or
   acquire a quiet line noise, QLN, of the xDSL line, and detect whether the xDSL/ISDN splitter is absent according to the similarity between the ISDN disturber PSD model and the QLN of the xDSL line;
   a client access equipment (2), adapted to receive and transmit xDSL signals for modulation and demodulation; and
   a central office end digital subscriber line access multiplexer, DSLAM (3), adapted to receive and split the signals sent by the client access equipment;
   wherein, the splitter-detecting unit (1) comprises:

   a disturber model establishing module (11), adapted to establish the ISDN disturber PSD model;
   a data collecting module(12), adapted to acquire the bit distributing parameters of the xDSL sub-carriers or the QLN of the xDSL line; and
   a processing module (13), connected with the disturber model establishing module (11) and the data collecting module (12), and adapted to calculate the correlation between the ISDN disturber PSD model and the bit distributing parameters of the xDSL sub-carriers or the similarity between the ISDN disturber PSD model and the QLN of the xDSL line, and detect whether the xDSL/ISDN splitter is absent according to the correlation or the similarity.

**Patentansprüche**

1.  Splitter-Detektionsverfahren, das Folgendes umfasst:

    Aufbauen (S201, S401) eines Störerleistungsspektraldichtemodells des diensteintegrierenden digitalen Netzes (integrated service digital network disturber power spectrum density model, ISDN-Störer-PSD-Modell); Erfassen (S202) von Bitverteilungsparametern von Unterträgern der digitalen Teilnehmerleitung (digital subscriber line sub-carriers, xDSL-Unterträger), und Detektieren (S203), ob ein xDSL/ISDN-Splitter fehlt, gemäß dem Verhältnis zwischen dem ISDN-Störer-PSD-Modell und den Bitverteilungsparametern der xDSL-Unterträger; oder Erfassen (S402) eines Rauschens einer stummen Leitung (quiet line noise, QLN) der xDSL-Leitung und Detektieren (S403), ob der xDSL/ISDN-Splitter fehlt, gemäß der Ähnlichkeit zwischen dem ISDN-Störer-PSD-Modell und dem QLN der xDSL-Leitung; wobei das Detektieren (S203), ob der xDSL/ISDN-Splitter fehlt, gemäß der Korrelation zwischen dem ISDN-Störer-PSD-Modell und den Bitverteilungsparametern der xDSL-Unterträger Folgendes umfasst:

    Berechnen eines Korrelationskoeffizienten zwischen dem ISDN-Störer-PSD-Modell und den Bitverteilungsparametern der xDSL-Unterträger; Bestimmen, ob ein absoluter Wert des Korrelationskoeffizienten größer ist als ein voreingestellter Schwellenwert; und falls ja, Bestimmen, dass der xDSL/ISDN-Splitter fehlt; wobei das Detektieren (S403), ob der xDSL/ISDN-Splitter fehlt, gemäß der Ähnlichkeit zwischen dem ISDN-Störer-PSD-Modell und dem QLN der xDSL-Leitung Folgendes umfasst:

    Berechnen der Ähnlichkeit zwischen dem ISDN-Störer-PSD-Modell und dem QLN der xDSL-Leitung; Bestimmen, ob die Ähnlichkeit größer ist als ein voreingestellter Schwellenwert; und falls ja, Bestimmen, dass der xDSL/ISDN-Splitter fehlt.

2.  Splitter-Detektionsverfahren nach Anspruch 1, wobei das Aufbauen des ISDN-Störer-PSD-Modells Folgendes umfasst: Verwenden der ISDN-Übertragungs-PSD oder einer Grundschwingung der ISDN-Übertragungs-PSD als das ISDN-Störer-PSD-Modell.

3.  Splitter-Detektionsverfahren nach Anspruch 1, wobei das Erfassen der Bitverteilungsparameter der xDSL-Unterträger oder des QLN der xDSL-Leitung Folgendes umfasst: Erfassen der Bitverteilungsparameter der xDSL-Unterträger oder des QLN der xDSL-Leitung aus einem Zugangsmultiplexer der digitalen Teilnehmerleitung, DSLAM, über ein einfaches Netzmanagementprotokoll, SNMP.

4.  Splitter-Detektionsverfahren nach Anspruch 1, wobei das Berechnen der Korrelation zwischen dem ISDN-Störer-PSD-Modell und den Bitverteilungsparametern der xDSL-Unterträger Folgendes umfasst: Verwenden der Pearson-Korrelationsberechnungsformel, um die Korrelation zu berechnen.

5.  Splitter-Detektionsverfahren nach Anspruch 1, wobei das Berechnen der Ähnlichkeit zwischen dem ISDN-Störer-PSD-Modell und dem QLN der xDSL-Leitung Folgendes umfasst: Verwenden eines Verfahrens der linearen Regression, um die Ähnlichkeit zu berechnen.

6.  Splitter-Detektionsvorrichtung, die Folgendes umfasst:

    Störermodellaufbaumodul (11), das ausgelegt ist, ein Störerleistungsspektraldichtemodell des diensteintegrierenden digitalen Netzes, ISDN-Störer-PSD-Modell, aufzubauen; ein Datensammelmodul (12), das ausgelegt ist, Bitverteilungsparameter von Unterträgern der digitalen Teilnehmerleitung, xDSL-Unterträgern, oder Rauschen einer stummen Leitung, QLN, der xDSL-Leitung zu erfassen; und ein Verarbeitungsmodul (13), das mit dem Störermodellaufbaumodul (11) und dem Datensammelmodul (13) verbunden ist und ausgelegt ist, die Korrelation zwischen dem ISDN-Störer-PSD-Modell und den Bitverteilungsparametern der xDSL-Unterträger oder die Ähnlichkeit zwischen dem ISDN-Störer-PSD-Modell und dem QLN der xDSL-Leitung zu berechnen und gemäß der Korrelation oder der Ähnlichkeit zu detektieren, ob ein xDSL/ISDN-Splitter fehlt;

wobei das Verarbeitungsmodul (13) Folgendes umfasst:

ein Berechnungsuntermodul (131), das ausgelegt ist, einen Korrelationskoeffizienten zwischen dem ISDN-Störer-PSD-Modell und den Bitverteilungsparametern der xDSL-Unterträger oder die Ähnlichkeit zwischen dem ISDN-Störer-PSD-Modell und dem QLN der xDSL-Leitung zu berechnen; ein Korrelationsbestimmungsuntermodul (132), das mit dem Berechnungsuntermodul verbunden ist und ausgelegt ist zum Bestimmen, ob ein absoluter Wert eines durch das Berechnungsuntermodul berechneten Korrelationskoeffizienten größer ist als ein erster Schwellenwert, und falls ja, zu bestimmen, dass ein xDSL/ISDN-Splitter fehlt; oder

ein Ähnlichkeitsbestimmungsuntermodul (133), das mit dem Berechnungsuntermodul verbunden ist und ausgelegt ist zum Bestimmen, ob die durch das Berechnungsuntermodul berechnete Ähnlichkeit größer ist als ein zweiter Schwellenwert, und falls ja, zu bestimmen, dass ein xDSL/ISDN-Splitter fehlt.

7. Splitter-Detektionssystem, das Folgendes umfasst.

eine Splitter-Detektionseinheit (1), die ausgelegt ist, ein Störerleistungsspektraldichtemodell des diensteintegrierenden digitalen Netzes, ISDN-Störer-PSD-Modell, aufzubauen, Bitverteilungsparameter von Unterträgern der digitalen Teilnehmerleitung, xDSL-Unterträgern, zu erfassen und gemäß der Korrelation zwischen dem ISDN-Störer-PSD-Modell und den Bitverteilungsparametern der xDSL-Unterträger zu detektieren, ob ein xDSL/ISDN-Splitter fehlt; oder

ein Rauschen einer stummen Leitung, QLN, der xDSL-Leitung zu erfassen und gemäß der Ähnlichkeit zwischen dem ISDN-Störer-PSD-Modell und dem QLN der xDSL-Leitung zu detektieren, ob der xDSL/ISDN-Splitter fehlt;

eine Clientzugriffseinrichtung (2), die ausgelegt ist, xDSL-Signale zur Modulation und Demodulation zu empfangen und zu senden; und

ein vermittlungsstellenseitiger Zugangsmultiplexer für digitale Teilnehmerleitung (digital subscriber line access multiplexer, DSLAM) (3), der ausgelegt ist, durch die Clientzugriffseinrichtung gesendete Signale zu empfangen und zu splitten; wobei die Splitter-Detektionseinheit (1) Folgendes umfasst:

ein Störermodellaufbaumodul (11), das ausgelegt ist, das ISDN-Störer-PSD-Modell aufzubauen;

ein Datensammelmodul (12), das ausgelegt ist, die Bitverteilungsparameter der xDSL-Unterträger oder das QLN der xDSL-Leitung zu erfassen; und

ein Verarbeitungsmodul (13), das mit dem Störermodellaufbaumodul (11) und dem Datensammelmodul (12) verbunden ist und ausgelegt ist, die Korrelation zwischen dem ISDN-Störer-PSD-Modell und den Bitverteilungsparametern der xDSL-Unterträger oder die Ähnlichkeit zwischen dem ISDN-Störer-PSD-Modell und dem QLN der xDSL-Leitung zu berechnen und gemäß der Korrelation oder der Ähnlichkeit zu detektieren, ob der xDSL/ISDN-Splitter fehlt.

## Revendications

1. Procédé de détection de séparateur, comprenant les étapes consistant à :

établir (S201, S401) un modèle de densité spectrale de puissance, dite PSD, de perturbateur de réseau numérique à intégration de services, dit ISDN ;

acquérir (S202) des paramètres de distribution de bits de sous-porteuses de ligne d'abonné numérique, dite xDSL, et détecter (S203) si un séparateur xDSL/ISDN est absent en fonction de la relation entre le modèle de PSD de perturbateur d'ISDN et les paramètres de distribution de bits des sous-porteuses de xDSL ; ou

acquérir (S402) un bruit sur ligne au repos, dit QLN, de la ligne xDSL, et détecter (S403) si le séparateur xDSL/ISDN est absent en fonction de la similitude entre le modèle de PSD de perturbateur d'ISDN et le QLN de la ligne xDSL ;

dans lequel l'étape consistant à détecter (S203) si le séparateur xDSL/ISDN est absent en fonction de la corrélation entre le modèle de PSD de perturbateur d'ISDN et les paramètres de distribution de bits des sous-porteuses de xDSL comprend les étapes consistant à :

calculer un coefficient de corrélation entre le modèle de PSD de perturbateur d'ISDN et les paramètres de distribution de bits des sous-porteuses de xDSL ;

déterminer si une valeur absolue du coefficient de corrélation est supérieure à une valeur de seuil préétablie ; et

si tel est le cas, déterminer que le séparateur xDSL/ISDN est absent ;

dans lequel l'étape consistant à détecter (S403) si le séparateur xDSL/ISDN est absent en fonction de la similitude entre le modèle de PSD de perturbateur d'ISDN et le QLN de la ligne xDSL comprend les étapes consistant à :

calculer la similitude entre le modèle de PSD de perturbateur d'ISDN et le QLN de la ligne xDSL ;
déterminer si la similitude est supérieure à une valeur de seuil préétablie ; et
si tel est le cas, déterminer que le séparateur xDSL/ISDN est absent.

2. Procédé de détection de séparateur selon la revendication 1, dans lequel l'étape consistant à établir le modèle de PSD de perturbateur d'ISDN comprend l'étape consistant à : utiliser comme modèle de PSD de perturbateur d'ISDN la PSD de transmission d'ISDN ou une onde fondamentale de la PSD de transmission d'ISDN.

3. Procédé de détection de séparateur selon la revendication 1, dans lequel l'étape consistant à acquérir les paramètres de distribution de bits des sous-porteuses de xDSL ou le QLN de la ligne xDSL comprend l'étape consistant à : acquérir les paramètres de distribution de bits des sous-porteuses de xDSL ou le QLN de la ligne xDSL à partir d'un multiplexeur d'accès de lignes d'abonné numériques, dit DSLAM, au moyen d'un protocole de gestion de réseau simple, dit SNMP.

4. Procédé de détection de séparateur selon la revendication 1, dans lequel l'étape consistant à calculer la corrélation entre le modèle de PSD de perturbateur d'ISDN et les paramètres de distribution de bits des sous-porteuses de xDSL comprend l'étape consistant à : faire appel à la formule de calcul de corrélation de Pearson pour calculer la corrélation.

5. Procédé de détection de séparateur selon la revendication 1, dans lequel l'étape consistant à calculer la similitude entre le modèle de PSD de perturbateur d'ISDN et le QLN de la ligne xDSL comprend l'étape consistant à : faire appel à une méthode de régression linéaire pour calculer la similitude.

6. Dispositif de détection de séparateur, comprenant :

un module d'établissement de modèle de perturbateur (11), adapté à établir un modèle de densité spectrale de puissance, dite PSD, de perturbateur de réseau numérique à intégration de services, dit ISDN ;
un module de collecte de données (12), adapté à acquérir des paramètres de distribution de bits de sous-porteuses de ligne d'abonné numérique, dite xDSL, ou un bruit sur ligne au repos, dit QLN, de la ligne xDSL ; et
un module de traitement (13), relié au module d'établissement de modèle de perturbateur (11) et au module de collecte de données (12), et adapté à calculer la corrélation entre le modèle de PSD de perturbateur d'ISDN et les paramètres de distribution de bits des sous-porteuses de xDSL ou la similitude entre le modèle de PSD de perturbateur d'ISDN et le QLN de la ligne xDSL, et à détecter si un séparateur xDSL/ISDN est absent en fonction de la corrélation ou de la similitude ;
dans lequel le module de traitement (13) comprend :

un sous-module de calcul (131), adapté à calculer un coefficient de corrélation entre le modèle de PSD de perturbateur d'ISDN et les paramètres de distribution de bits des sous-porteuses de xDSL ou la similitude entre le modèle de PSD de perturbateur d'ISDN et le QLN de la ligne xDSL ; un sous-module de détermination de corrélation (132), relié au sous-module de calcul, et adapté à déterminer si une valeur absolue du coefficient de corrélation calculé par le sous-module de calcul est supérieur à une première valeur de seuil et, si tel est le cas, à déterminer qu'un séparateur xDSL/ISDN est absent ; ou
un sous-module de détermination de similitude (133), relié au sous-module de calcul, et adapté à déterminer si la similitude calculée par le sous-module de calcul est supérieure à une deuxième valeur de seuil et, si tel est le cas, à déterminer que le séparateur xDSL/ISDN est absent.

7. Système de détection de séparateur, comprenant :

une unité de détection de séparateur (1), adaptée à établir un modèle de densité spectrale de puissance, dite PSD, de perturbateur de réseau numérique à intégration de services, dit ISDN, à acquérir des paramètres de distribution de bits de sous-porteuses de ligne d'abonné numérique, dite xDSL, et à détecter si un séparateur xDSL/ISDN est absent en fonction de la corrélation entre le modèle de PSD de perturbateur d'ISDN et les paramètres de distribution de bits des sous-porteuses de xDSL ; ou

à acquérir un bruit sur ligne au repos, dit QLN, de la ligne xDSL, et à détecter si le séparateur xDSL/ISDN est absent en fonction de la similitude entre le modèle de PSD de perturbateur d'ISDN et le QLN de la ligne xDSL ;

un équipement d'accès client (2), adapté à recevoir et à transmettre des signaux xDSL à des fins de modulation et de démodulation ; et

un multiplexeur d'accès de lignes d'abonné numériques, dit DSLAM, côté centre de commutation (3), adapté à recevoir et à séparer les signaux envoyés par l'équipement d'accès client ;

dans lequel l'unité de détection de séparateur (1) comprend :

un module d'établissement de modèle de perturbateur (11), adapté à établir le modèle de PSD de perturbateur d'ISDN ;

un module de collecte de données (12), adapté à acquérir les paramètres de distribution de bits des sous-porteuses de xDSL ou le QLN de la ligne xDSL ; et

un module de traitement (13), relié au module d'établissement de modèle de perturbateur (11) et au module de collecte de données (12), et adapté à calculer la corrélation entre le modèle de PSD de perturbateur d'ISDN et les paramètres de distribution de bits des sous-porteuses de xDSL ou la similitude entre le modèle de PSD de perturbateur d'ISDN et le QLN de la ligne xDSL, et à détecter si le séparateur xDSL/ISDN est absent en fonction de la corrélation ou de la similitude.

Establish an integrated service digital
network (ISDN) disturber power
spectrum density (PSD) model

S101

Acquire bit distributing parameters of
digital subscriber line (xDSL) sub-
carriers

S102

Detect whether a xDSL/ISDN splitter
is absent according to the correlation
between the ISDN disturber PSD
model and the bit distributing
parameters of the xDSL sub-carriers

S103

# FIG. 1

FIG. 2

```
┌─────────────────────────────────────────┐
│                                          │        S301
│   Establish an ISDN disturber PSD model  │
│                                          │
└─────────────────────────────────────────┘
                     │
                     ▼
┌─────────────────────────────────────────┐
│                                          │        S302
│   Acquire a quiet line noise (QLN) of the│
│                 xDSL line                │
└─────────────────────────────────────────┘
                     │
                     ▼
┌─────────────────────────────────────────┐
│                                          │        S303
│  Detect whether the xDSL/ISDN splitter is│
│  absent according to the similarity      │
│  between the ISDN disturber PSD model    │
│  and the QLN of the xDSL line            │
└─────────────────────────────────────────┘
```

## FIG. 3

```
                            1
        ┌──────────────────────────────────────┐
        │         Splitter-detecting unit       │
        │  ┌──────────────┐  ┌──────────────┐   │
        │  │  Disturber   │  │              │   │
     11 │  │    model     │  │     Data     │ 12│
        │  │ establishing │  │  collecting  │   │
        │  │    module    │  │    module    │   │
        │  └──────────────┘  └──────────────┘   │
     13 │  ┌────────────────────────────────┐   │
        │  │        Processing module       │   │
    131 │  │  ┌──────────────────────────┐  │   │
        │  │  │ Calculating sub-module   │  │   │
        │  │  └──────────────────────────┘  │   │
    132 │  │  ┌──────────────────────────┐  │   │
        │  │  │ Correlation determining  │  │   │
        │  │  │       sub-module         │  │   │
    133 │  │  └──────────────────────────┘  │   │
        │  │  ┌──────────────────────────┐  │   │
        │  │  │ Similarity determining   │  │   │
        │  │  │       sub-module         │  │   │
        │  │  └──────────────────────────┘  │   │
        │  └────────────────────────────────┘   │
        └──────────────────────────────────────┘

        3                          2
   ┌──────────┐              ┌──────────┐
   │ Central  │              │  Client  │
   │office end│──────────────│  access  │
   │  DSLAM   │              │equipment │
   └──────────┘              └──────────┘
```

## FIG. 4

**EP 2 216 972 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1761012 A1

- WO 2007008835 A2